(19) **Europäisches Patentamt**

**European Patent Office**

**Office européen des brevets**

(11) Publication number: **0 041 808**
**B1**

(12) **EUROPEAN PATENT SPECIFICATION**

(45) Date of publication of patent specification: **14.08.85**

(51) Int. Cl.⁴: **G 05 B 19/42, A 43 D 37/00**

(21) Application number: **81302394.2**

(22) Date of filing: **01.06.81**

(54) Determining an operating path of a tool in relation to a three-dimensional surface of a workpiece.

(30) Priority: **10.06.80 GB 8019007**

(43) Date of publication of application:
**16.12.81 Bulletin 81/50**

(45) Publication of the grant of the patent:
**14.08.85 Bulletin 85/33**

(84) Designated Contracting States:
**DE FR GB IT**

(56) References cited:
**FR-A-2 081 697**
**GB-A-1 074 368**
**GB-A-1 491 586**
**US-A-3 366 934**
**US-A-3 559 021**
**US-A-4 021 651**

**STEUERUNGSTECHNIK, vol. 3, no. 4, April
1970 Mainz, DE WALCHER, S "Digitalisierung
grafischer Vorlagen durch automatische
Kurvenabtastung", pages 114-119**

(73) Proprietor: **BUSM Co. Limited
P.O. Box 88 Ross Walk Belgrave
Leicester LE4 5BX (GB)**
(84) **GB**

(73) Proprietor: **USM Corporation
426 Colt Highway
Farmington Connecticut 06032 (US)**
(84) **DE FR IT**

(72) Inventor: **Peck, Alan Michael
52 Amherst Road
Beverly, Mass. 01915 (US)**
Inventor: **Moore, David
63, Bosworth Road
Barlestone Nuneaton Warwickshire (GB)**
Inventor: **Mansfield, Graham John
52, Woodfield Road
Oadby Leicester (GB)**
Inventor: **Graveling, Frederick James
24 Monsell Drive
Aylestone Leicester (GB)**
Inventor: **Reedman, David Creyke
The Cottage Main Street
Wartnaby Melton Mowbray Leicestershire (GB)**

(74) Representative: **Atkinson, Eric et al
Emhart Patents Department P.O. Box 88 Ross
Walk
Belgrave Leicester LE4 5BX (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

This invention is concerned with a method of determining an operated path of a tool in reflation to a three-dimensional surface of a workpiece, said method comprising a teaching stage wherein, starting from an initial position of the tool in relation to the workpiece surface, a plurality of selected positions of the tool in relation to the surface is successively determined, each such position being stored, in the form of digitised co-ordinate axis values, in a memory device, and such stored values, corresponding to the initial and selected positions, constituting a set of co-ordinate axis values from which, in carrying out a subsequent operation on the or a like workpiece, the operating path of the tool in relation to the workpiece can be derived. In addition, the invention is concerned with apparatus for operating progessively along marginal portions of shoe bottoms, such apparatus being provided with path determining means by which the operating path of the tool of such apparatus in relation to the shoe bottom can be determined using such a method.

There is described in US—A—4021651 a programmed manipulator which is operable in "teaching" and "operating" modes of operation, the manipulator having a tool (constituted by a gripper on a manipulator arm) which, in the teaching mode, is movable along a plurality of axes under the control of the operator, using a so-called teach setter by which the operator can actuate cylinders associated with each of the axes of movement in order to move the tool successively to a plurality of selected positions. At each position, furthermore, digitised information can be stored in a memory device relating to each of the individual axes of movement, upon actuation of a memory setting device. To this end, associated with each of the cylinders is a position detector.

In using such an apparatus, it will be appreciated that each selected position is at the complete discretion of the operator, so that in some cases an operator will select too few such positions, with a result that inadequate information is stored to enable an accurate operating path to be derived, while in other cases too many positions will be selected, which is not only time-consuming in the teaching mode, but also excessively demanding on computer power in the operating mode.

In GB—A—1319561 on the other hand is described an automatic digitising system in which the whole of a three-dimensional surface of a workpiece is scanned using a probe which is movable in a grid system over the whole of the surface, a mathematical model of the surface thus being created and stored in the form of digitised information in a memory device, on the basis of which information machining operations can subsequently be performed to reproduce workpieces having surfaces of the configuration thus scanned. Such information in the form of a three-dimensional grid is of course highly desirable where the information is to be used for reproducing the whole surface. However, again, it will be appreciated that a substantial amount of computer power is required in order to create such a grid and would be considered excessive where a tool is required merely to perform an operating function along a particular path on a three-dimensional surface of a workpiece which has already been formed. In addition, since the movement of the probe is controlled completely automatically, no operator discretion is allowed in determining the operating path; whereas this is clearly acceptable where a three-dimensional machining operation is subsequently to be performed according to the digitised information obtained, a need is generally recognised, when determining an operating path of a tool over a three-dimensional surface, for operator input.

In GB—A—1491586 is described a method for teaching a desired operating path of a tool carried by a robot, wherein the operator moves the tool, carried at the end of a manipulator arm, through a required path, position transducers being provided whereby the path can be stored, in the form of digitised coordinate axis values, in a memory device. Thereafter, a computer derives from the digitised information further information, again in the form of digitised coordinate axis values, for a selected number of positions of the tool in relation to the surface, which derived information represents an approximation of the actual operating path, the approximation being nevertheless sufficient for the purpose intended.

It will be appreciated that again in this case, although the operator originally determines the actual path, he has no control over the approximation path which is followed in the operating mode of the robot. This may be acceptable in the particular case, which relates to a paint-applying robot, but would not be satisfactory where a specific path is to be followed by a tool in relation to a three-dimensional surface of a workpiece.

It is thus the object of the present invention to provide an improved method of determining an operating path of a tool in relation to a three-dimensional surface of a workpiece, wherein the tool is intended for operating in contact with a previously shaped three-dimensional surface of a workpiece, and further wherein the determination of the path is under operator control but subject to the distances between successive selected positions being pre-determined, so that on the one hand adequate information from which the operating path of the tool can be derived is provided, while on the other hand excessive demands on operator time and on computer power are minimised.

This object is resolved in accordance with the present invention, in carrying out a method as set out in the first paragraph above, in that the initial and selected positions are constituted by initial and selected points of contact between the tool and the workpiece surface and further in that, for determining each selected point of contact, following the storing of the digitised coordinate axis values for the preceding point the tool is first separated from said surface, by a pre-determined distance from said point, along a first dimension, whereafter the tool and said surface are returned into contact along said first dimension and/or along a second dimension and, in response to such return movement, corresponding relative movement takes place between the tool and surface simultaneously along a third dimension so as to maintain the pre-determined distance between the tool and said last preceding stored point, the tool and surface thus being brought into contact at a further point, which is then stored as aforesaid, said further point, which is thus spaced from the last preceding stored point by the pre-determined distance, regardless of the contour of said surface, thus constituting a next succeeding stored point.

It will thus be appreciated that the control of the predetermined distance referred to above is based on the concept of a sphere, the last preceding stored point constituting the centre of a sphere und the predetermined distance corresponding to the radius of the sphere, the arrangement being such that once the separation has been effected to bring the tool effectively to the surface of the sphere, the relative movement along the three dimensions ensures that the tool is maintained at said surface until the further point is reached. It will of course be appreciated that, in using this method, once the tool and surface have been separated by said predetermined distance, it is desirable to provide some restriction on further relative movement taking place therebetween the effect of which would be to separate them by a distance greater than said predetermined distance.

By using the method in accordance with the invention, the spacing of the successive points is controlled, with a result that, by also controlling the time taken, in subsequent operations of the machine, to move from one point to the next succeeding point, the feed speed of the tool in relation to the workpiece surface can be controlled during the determining of the operating path of the tool. Thus, for example, where a constant velocity is required, it is merely necessary to ensure that the distance between each two points is the same in every case.

It will be appreciated that, in order to ensure that separation of the tool and surface as aforesaid can always take place, it is desirable that said first dimension extends heightwise of the surface, preferably normal, or substantially normal thereto.

If the tool and/or the surface is to any extent compressible, the relative position between the tool and surface, when moved to a point to be digitised, may vary according to the pressure applied by the one to the other. Thus, preferably in carrying out the method in accordance with the invention, the load applied at the point to be digitised is constant for each such point. Thus, in carrying out said method, the operator positions the tool and surface in a desired position, with said tool and surface adjacent or in contact with one another, and actuates a "teach" circuit, whereupon firstly the applied load is adjusted to its constant value, say 1 Kg, and thereafter the digitised values for the point are stored as aforesaid.

The method in accordance with the invention has been found to be suitable for determining the path of a roughing tool by which marginal portions of the bottom of a lasted shoe can be roughed, prior to the attachment by adhesive to such shoe bottom of a sole unit. More especially, the method has been suitably adapted for use in an apparatus in which a shoe is supported by a shoe support which is movable along a dimension extending lengthwise of the shoe bottom, to move the shoe bottom past a tool which is supported by tool supporting means for movement widthwise and heightwise of the shoe bottom, as the shoe support is moved lengthwise of the shoe bottom as aforesaid. Furthermore, where the method is so adapted, preferably the tool, which may be constituted by a radial roughing tool by which the roughing operation is to be performed, is also used for determining the operating path as aforesaid. The roughing tool is preferably in the form of a wire brush, the bristles of which extend radially from an axis about which the brush is caused to rotate in the operation of the apparatus. However, instead of a wire brush, any abrasive-covered tool may be used, whether in the form of an abrasive-covered roll or an abrasive band running round a tool and backed up thereby at the point of engagement with the shoe bottom, and the phrase "radial roughing tool" where used herein is intended to include all such tools as referred to in the paragraph and also the like tools.

For putting the method into effect, the apparatus in accordance with the invention is provided with means whereby said operating path can be determined in a setting-up mode of the apparatus, said path determining means comprising (i) actuating means whereby, starting from a first selected point of contact between the tool and shoe bottom, relative heightwise movement is caused to take place between the shoe support and the tool supporting means through a predetermined distance, (ii) a manually operable control device for causing relative heightwise and widthwise movement to take place between the shoe support and the tool supporting means under operator control, (iii) means, operable in response to relative movement being effected by operation of the manually operable control device, for causing relative lengthwise movement to take place between the shoe support und the tool supporting means simultaneously with such heightwise and/or widthwise relative movement so as to maintain the predetermined distance between the tool and said first selected point, and (iv) computer control means, comprising (a) digitising means whereby a set of co-ordinate axis values can be calculated in respect of the relative positions of the shoe support and tool supporting means for each selected point of contact between tool and shoe bottom, (b) a memory device whereby each such set of digitised values can be stored (the digitised values corresponding to all the selected points constituting a set of information from which the operating path can be derived), and (c) means whereby, when the apparatus is in an operating mode, the operating path of the tool is derived from said set of information stored by said memory device.

It will of course be appreciated that, once the set of information has been acquired, the operating path is derived therefrom using an interpolation programme stored in the computer control means. Furthermore, the computer control means is also preferably provided with a grading programme so that the set of information, which has been obtained using a model size shoe, can be utilised for shoes of the same style, but of different sizes; to this end, the apparatus is preferably provided with a shoe length detecting arrangement by which the length of the shoe to be operated upon can be "read". Again, the set of information will have been obtained using a shoe of one hand, i.e. a left or a right, and the computer control means preferably also is provided with a programme by which the set of information can be supplied to left and right shoes equally; again, to this end, the apparatus will preferably also be provided with sensing means for sensing whether the shoe supported by the shoe support is a left or a right.

The means for effecting relative lengthwise, widthwise and heightwise movement between the tool supporting means and the shoe support as aforesaid preferably comprises a plurality of numerically controlled motors to which drive pulses can be supplied by the computer control means. By the term "numerically controlled motor" where used herein is to be understood a motor the operation of which is controlled by control signals supplied thereto in accordance with stored information appropriate to a desired operation. Examples of such motors are stepping motors and d.c. servomotors.

It will be appreciated that, in digitising a three-dimensional surface of e.g. a shoe bottom, errors are likely to arise from time to time, since the edge of the shoe bottom, e.g, in the waist region, is often indistinct. In order to allow corrections to be made, without the need for re-digitising the whole shape, therefore, editing means may be provided, said means comprising another manually operable device, e.g. an actuating button, actuation of which, in conjunction with an appropriate keyboard operation, causes the tool supporting means and the shoe support to be positioned at a desired digitised point to be corrected, the correction being made by said first-mentioned manually operable control device as aforesaid, and the digitising means being actuated to calculate a set of digitised values for the corrected position, which set is then stored by the memory device in place of the information relating to the point before such correction.

Where the apparatus is for performing roughing operations progressively along marginal portions of shoe bottoms, the tool supporting means supports a radial roughing tool by which marginal portions of the shoe bottom can be progressively roughed. In addition, a scouring tool may also be provided, by which a scouring operation can be effected on a toe end portion of the shoe bottom, the arrangement being such that relative movement, both lengthwise and heightwise of such shoe bottom, is effected between the scouring tool support and the shoe support, such relative movement being controlled by the computer control means in accordance with the set of information stored by the memory device and using appropriate lock-up tables.

There now follows a detailed description, to be read with reference to the accompanying drawings, of one method in accordance with the invention and also one apparatus in accordance with the invention; it will of course be appreciated that this method and this apparatus have been selected for description merely by way of exemplification of the invention and not by way of limitation thereof.

In the accompanying drawings:—

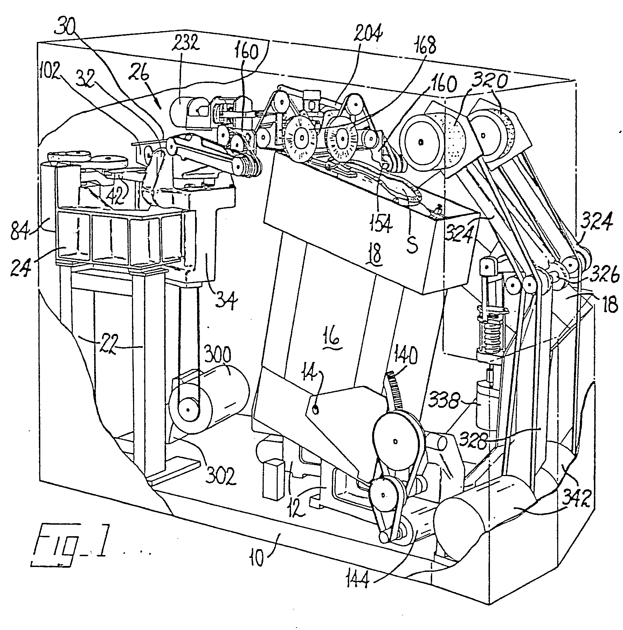

Figure 1 is a left hand perspective view of the apparatus; and

Figure 2 is a diagram indicating the layout of a control panel of the apparatus.

The apparatus now to be described is suitable for use in performing a roughing operation progressively along marginal portions of shoe bottoms, and comprises a base 10 on which are mounted two upstanding brackets 12 each supporting a pivot shaft 14, each shaft carrying a structure 16 on which a shoe support 18 is carried. Each shoe support 18 is arranged to support a shoe S carried thereon, bottom uppermost, with the toe end thereof facing towards the front of the apparatus i.e. towards the operator. Towards the rear of the base 10 is also mounted a support column structure 22 supporting in turn a horizontal web structure 24 by which tool supporting means generally designated 26 is carried, said means supporting two rotary radial roughing brushes 168 which are caused to rotate in contrary directions such that each brush effects an in-wiping action on the marginal portion of the bottom of a shoe as it is caused to operate progressively therealong. For causing rotation of the brushes, an electric motor 300, supported by a bracket 302 on the base 10, is operatively connected thereto through a series of belts and pulleys.

The tool supporting means comprises a bifurcated arm 30 which is supported, for pivotable movement about a horizontal axis, in upstanding lugs 32, one arranged at either side of the arm 30, of a support casting 34, which is itself supported, above and below the web structure 24, for pivotal movement about a vertical axis. It will thus be appreciated that, in the question of the apparatus, either one of the shoe supports 18 can pivot about its shaft 14 to move a shoe S supported thereby in a direction extending generally lengthwise of the bottom of the shoe, while the tool supporting means is capable of pivotal movement about two axes thus to move the tools 168 supported thereby widthwise and heightwise of the shoe bottom, as the shoe support is moved as aforesaid.

For effecting such movements, furthermore, the apparatus comprises, for each shoe support 18, a first stepping motor 144 mounted on the base 10 and effective, through a series of pulleys and belts and through a toothed segment 140 mounted on its associated support structure 16, to cause pivotal movement of the shoe support 18 to take place about the horizontal axis of the shaft 14. Similarly, the apparatus comprises a second stepping motor 84, carried by the web structure 24 and effective, through a series of pulleys and belts and through a toothed segment 42, to cause pivotal movement of the support casting 34, and thus of the arm 30 supported thereby, about a vertical axis on the web structure 24. Again, the apparatus comprises a third stepping motor (not shown) which is supported by the support casting 34 rearwardly of its vertical pivot, and acts on a rearwardly extending portion 102 of the arm 30, thus to cause the arm 30 to pivot about a horizontal axis provided by the mounting of the arm in the support casting 34.

The arm 30 of the tool supporting means also supports, for pivotal movement thereon about a horizontal axis defined by pins 154, a cradle 160 (forming part of the tool supporting means) on which the tools 168 are carried, said horizontal axis being arranged to pass through the area of engagement between the operating surface of each brush 168 and the shoe bottom in the operation of the apparatus. Pivoting the cradle 160 in this manner enables the plane of the operating surface of each brush to be maintained normal, or substantially normal, to the shoe bottom portion being operated upon. For so pivoting the cradle, the apparatus comprises a fourth stepping motor 232 operatively connected by a rod 204 to said cradle 160.

The apparatus also comprises two scouring tools 320, in the form of abrasive rolls, one associated with each shoe support 18. Each scouring tool is carried at the upper end of a support arm 324, each arm 324 being mounted for pivotal movement about a transverse shaft 326 carried by a support column 328, and is caused to rotate by an electric motor 342 acting through a system of pulleys and drive belts. The support column 328 and motors 342 are carried on the base 10. The apparatus also comprises a fifth stepping motor 338 (for each scouring tool 320) by which the support arm 324 associated therewith is caused to pivot about its transverse shaft 326, thus to being the scouring tool 320 carried thereby into operative engagement with the bottom of a shoe carried by the shoe support 18, and to maintain a desired heightwise relationship between the tool and the shoe bottom, as the shoe support 18 is caused to move, in a direction lengthwise of the shoe bottom, as aforesaid.

The apparatus also comprises computer control means which, in the operation of the apparatus, is effective to control the relative positioning of the shoe bottom and the roughing brushes 168, as the latter are caused to operate progressively along opposite marginal portions of the shoe bottom, both lengthwise, heightwise and widthwise of said shoe bottom, by generating and supplying control pulses to each of the stepping motors, in accordance with a programmed instruction, including digitised co-ordinate axis values, using three co-ordinating axes, for a plurality of successive selected points along the marginal portion to be operated upon of the shoe bottom, such digitised information being stored in a memory of the computer. In addition, the computer supplies control pulses to the stepping motor 232 for causing the cradle 160 to pivot and also to the appropriate stepping motor 338, for controlling operation of its associated scouring tool. In addition, the computer has a grading programme which is effective to vary the operating path of the tools appropriately to the length of the shoe being operated upon.

For determining the operating path of the tool in relation to the shoe bottom, the various stepping motors of the apparatus and also the computer control means thereof can be utilised by placing a model shoe S in one of the shoe supports 18 and moving the brushes 168 and such shoe relative to one another under the control of the operator, and causing selected points of contact between each brush and the shoe bottom to be digitised using the computer control means and to be thereafter stored in the memory of such computer.

In carrying out the method in accordance with the invention, for determining such operating path, the appropriate brush 168 and the leading, heel end, portion of shoe bottom are first positioned at an initial point which is then digitised and stored as aforesaid, and thereafter, starting with the tool at said stored point, the tool 168 is first separated from the surface of the shoe bottom, by the predetermined distance from said point, along a first dimension, heightwise of the shoe bottom, under the control of said third stepping motor (not shown). Such separation may be viewed conveniently as moving the tool from the centre of a sphere, which centre is defined by the stored point, to the surface of the sphere, the sphere having a radius equal to the predetermined distance. Thereafter, in carrying out said method, the tool 168 is returned along said first dimension and/or along a second dimension, extending widthwise of the shoe bottom under the control of the stepping motor 84, so as to once again contact the shoe bottom, and in response to such return movement corresponding movement of the shoe support 18 takes place simultaneously, along a third dimension, extending in a direction lengthwise of the shoe bottom, under the control of the stepping motor 144 associated with the shoe support, so as to maintain the predetermined distance between the tool 168 and the last preceding stored point. In this manner, the movement of the tool in relation to the shoe bottom may be regarded as maintaining the tool on the surface of the sphere referred to hereinbefore. The tool and the surface are thus brought into contact once more at a further point, spaced from the last preceding stored point by the predetermined distance, regardless of the contour of said surface, and this further point can then be digitised and stored in the computer memory, and constitutes thus a next succeeding stored point.

In carrying out said method, in order to ensure that the compressibility of the tool 168 and/or the material of the marginal portion of the shoe bottom to be roughed does not affect the relative position to be digitised of the tool and surface, the tool is urged against the shoe bottom with a predetermined load, say of 1 Kg, prior to the digitising of the point as aforesaid. This load is maintained constant for each successive point.

This procedure is then repeated using each stored point in turn as a last preceding stored point for purposes of determining the next succeeding stored point, until an appropriate number of stored points, constituting a set of information, has been provided. The operating path for the tool along said shoe bottom can then be derived, using an interpolation programme of the computer. It will also be appreciated that, by providing in the shoe support means for sensing whether the shoe supported thereby is a left or a right, and also by providing a shoe length detecting arrangement for "reading" the length of such shoe, the set of information can be utilised, in combination with a grading programme and a "reversing" programme, for operating along any size of shoe within the particular style which has been digitised and stored as aforesaid.

In order that, in an operating mode of the apparatus, the speed at which the tool 168 is caused to track along a marginal portion of the bottom of a shoe S supported by the shoe support 18 remains constant, or substantially so, the predetermined distance between successive points, in the digitising mode of operation of the apparatus, is constant for all the points. However, if it is desired to vary the speed of relative movement between the brush and shoe bottom during the operating cycle, this can be achieved in the digitising stage by varying the predetermined distance.

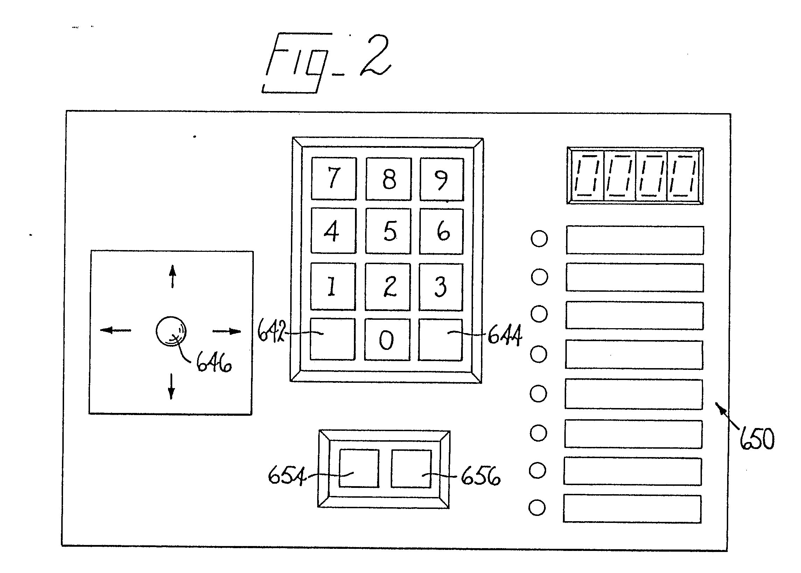

The apparatus comprises operator-controlled means whereby the operating path can be determined in a setting-up mode of the apparatus, in accordance with the aforementioned method, said means comprising a manually operable control device (see Figure 2) having a control panel including a keyboard generally designated 640, including "number" buttons (from 0 to 9) and a "teach" button 642. In addition, the control panel has a joy-stick 646 by which movement of the tool supporting means widthwise and heightwise of the shoe bottom can be effected under the control of the operator in opposite directions. Furthermore, the control panel has a read-out section generally designated 650, including a digital display 652.

In using the path determining means, in carrying out the aforementioned method, with the stepping motors in a datum position, relative movement is first effected to bring the brush 168 and the heel end of the shoe bottom to a starting point, this starting point then being stored in the computer memory by operation of the "teach" button 642. Operation of this button actuates a "teach" circuit of the computer, whereupon the tool 168 is urged into contact with the shoe bottom under the predetermined load and thereafter a set of co-ordinate axis values is calculated in respect of the relative positions of the shoe support and tool supporting means, by digitising means of the computer, and the digitised values are then stored in the memory device of the computer.

Operation of the "teach" button is also effective to cause the tool 168 to be raised from the surface of the shoe bottom through a predetermined distance, as above described. Thereafter, using the joy-stick 646, which is movable in four directions (representing two directions heightwise and two directions widthwise of the shoe bottom), the operator causes the tool to be lowered towards the shoe bottom and to be positioned widthwise thereof, while simultaneously the "teach" circuit causes the stepping motor 144 to be operated to move the shoe support, in a direction extending lengthwise of the shoe bottom, thus to maintain the distance between the tool and the last stored point on the shoe bottom at said predetermined distance from one another. When a further point of contact between the tool and shoe bottom has been reached, and further the operator is satisfied that the selected point will lie on a desired operating path of the tool relative to the shoe bottom in an operating mode of the apparatus, he again actuates the "teach" button 642, whereby digitised information concerning the relative positions of the tool and shoe bottom is generated and stored by the memory device of the computer. Operating the "teach" button, of course, again causes the brush to be raised from the surface of the shoe bottom through the predetermined distance, in readiness for determining the next succeeding point to be stored.

When the digitised information for each point has been obtained in the above manner, the information thus obtained constitutes a set of information from which can be derived the operating path of the tools 168, in an operating mode of the apparatus, relative to the shoe bottom, regardless of whether the shoe is a left or a right, and regardless of its size; to this end, the computer comprises a "reversing" circuit, by which the digitised information is reversed for lefts und rights as sensed by sensing means of the shoe support, and also a grading programme, which is actuated by a shoe length detecting arrangement of the shoe support, for varying the size and the style pattern as digitised.

In using the apparatus in accordance with the invention, in an operating mode, it has been found desirable to be able to vary the load applied to the shoe bottom by the tool as different sections of the shoe bottom are traversed by the tool. To this end, for use in a digitising mode of the machine, an actuating "brush load" button 654 is provided actuation of which, followed by selection of an appropriate two-digit number on the keyboard 640, will serve to select an appropriate load to be applied, in the operating mode, by the tool. The button 654 and keyboard are actuated as aforesaid prior to actuation of the "teach" button 642 so that the newly selected load forms part of the set of digitised values associated with a given point. Furthermore, the load selected will be maintained for each successive point until a new load is selected.

The control panel also has a "edit" button 644 actuation of which allows the digitised information stored by the memory of the computer control means to be corrected should any error subsequently be found therein. In using the editing means, the operator selects the point to be corrected by actuating the "edit" button and appropriate "number" buttons of the keyboard 640, whereupon the tool supporting means and the shoe support are moved to bring the tool 168 and shoe bottom to the point selected. Thereafter, using the joy-stick 646, the operator re-positions the tool and shoe bottom, subsequent actuation of the "teach" button then being effective to cause digitised information concerning the new position to be stored in place of the information previously stored relating to the point prior to correction. Actuation of the "teach" button also moves the tool to the next digitised point, in case correction also has to be made thereto. When no further correction is required and "end teach" button 656 provided on the control panel is actuated, such actuation causing the tool supporting means and shoe support to be returned to their initial position.

For controlling the heightwise position of each scouring tool 320 in relation to the shoe bottom, as the shoe support 18 is caused to move lengthwise of the shoe bottom as aforesaid, the digitised information which has been stored can be used for controlling the stepping motor 338 associated with the scouring tool, the computer control means comprising a control sub-circuit which relates the set of information stored to appropriate look-up tables and supplies appropriate signals to said stepping motor.

In carrying out the method in accordance with the invention either of the shoe supports 18 may be utilised. In addition, the model shoe selected to be digitised may be of any desired size (though preferably in the middle of the size range for the style) and be either a left or a right, the shoe length detecting arrangement and the sensing means of the shoe support used passing appropriate information to the computer control means.

In the operating mode of the apparatus, furthermore, one of the brushes 168 is arranged to operate along the marginal portion of one side of the shoe bottom as the shoe support 18 is moved in a first direction and the other brush 168 operates along the opposite marginal portion during the return movement of the shoe support. In the digitising mode of the apparatus, therefore, the two brushes are similarly used in obtaining the set of information from which one operating path of the brushes is to be derived.

**Claims:**

1. Method of determining an operating path of a tool in relation to a three-dimensional surface of a workpiece, said method comprising a teaching stage wherein, starting from an initial position of the tool in relation to the workpiece surface, a plurality of selected positions of the tool in relation to the surface is successively determined, each such position being stored, in the form of digitised co-ordinated axis values, in a memory device, and such stored values, corresponding to the initial and selected positions, constituting a set of co-ordinate axis values from which, in carrying out a subsequent operation on the or a like workpiece, the operating path of the tool in relation to the workpiece surface can be derived, characterised in that the initial and selected positions are constituted by initial and selected points of contact between the tool and the workpiece surface and further in that, for determining each selected point of contact, following the storing of the digitised co-ordinate axis values for the preceding point the tool is first separated from said surface, by a pre-determined distance from said point, along a first dimension, whereafter the tool and said surface are returned into contact along said first dimension and/or along a second dimension and, in response to such return movement, corresponding relative movement takes place between the tool and surface simultaneously along a third dimension so as to maintain the pre-determined distance between the tool and said last preceding stored point, the tool and surface thus being brought into contact at a further point, which is then stored as aforesaid, said further point, which is thus spaced from the last preceding stored point by the pre-determined distance, regardless of the contour of said surface, thus constituting a next succeeding stored point.

2. A method according to Claim 1 wherein each point is spaced from its last preceding stored point by the same predetermined distance.

3. A method according to either one of Claims 1 and 2 wherein said first dimension extends heightwise of the surface.

4. A method according to any one of Claims 1 to 3 wherein prior to the storing of each point as aforesaid, the tool and surface are urged into contact with one another with a predetermined load.

5. A method according to Claim 4 wherein the predetermined load is constant for all the points.

6. Apparatus for operating progressively along marginal portions of shoe bottoms, comprising a shoe support for supporting, bottom uppermost, a last carrying a shoe, tool supporting means, means for effective relative movement, lengthwise, widthwise and heightwise of such shoe bottom, between the shoe support and the tool supporting means whereby a tool supported by the tool supporting means can be caused to move along an operating path relative to the bottom of a shoe supported by the shoe support, and means whereby said operating path can be determined in a setting-up mode of the apparatus, using a method according to any one of the preceding Claims, the apparatus being characterised in that said path determining means comprises—

(i) actuating means whereby, starting from a first selected point of contact between the tool (168) and shoe bottom, relative heightwise movement is caused to take place between the shoe support (18) and the tool supporting means (26) through a predetermined distance,

(ii) a manually operable control device (646) for causing relative heightwise and widthwise movement to take place between the shoe support (18) and the tool supporting means (26) under operator control,

(iii) means, operable in response to relative movement being effected by operation of the manually operable control device (646), for causing relative lengthwise movement to take place between the shoe support (18) and the tool supporting means (26) simultaneously with such heightwise and/or widthwise relative movement so as to maintain the predetermined distance between the tool (168) and said first selected point, and

(iv) computer control means, comprising (a) digitising means whereby a set of co-ordinate axis values can be calculated in respect of the relative positions of the shoe support (18) and tool supporting means (26) for each selected point of contact between tool (168) and shoe bottom, (b) a memory device whereby each such set of digitised values can be stored (the digitised values corresponding to all the selected points constituting a set of information from which the operating path can be derived), and (c) means whereby, when the apparatus is in an operating mode, the operating path of the tool (168) is derived from said set of information stored by said memory device.

7. Apparatus according to Claim 6 characterised in that operation of the digitising means is initiated under the control of the operator, the arrangement being such that, upon such initiation, the actuating means is also caused to operate to cause relative heightwise movement to take place through a predetermined distance as aforesaid between the tool supporting means (26) and the shoe support (18).

8. Apparatus according to either one of Claims 6 and 7 characterised in that the means for effecting relative lengthwise, widthwise and heightwise movement between the tool supporting means and the shoe support as aforesaid comprises a plurality of numerically controlled motors (as herein defined) (144, 84, — ).

9. Apparatus according to any one of Claims 6 to 8 wherein editing means (644) is provided by which corrections can be made to the digitised information, said means comprising another manually operable device (644) actuation of which causes the tool supporting means (26) and the shoe support (18) to be positioned at a desired digitised point to be corrected, the correction being made by said first-mentioned manually operable control device (646) as aforesaid, and the digitising means being actuated to calculate a set of digitised values for the corrected position, which set is then stored by the memory device in place of the information relating to the point before such correction.

10. Apparatus according to any one of Claims 6 to 9 wherein the tool supporting means supports a radial roughing tool (as hereinbefore defined) by which a marginal portion of a shoe bottom can be progressively roughed, and a scouring tool (320) is also provided by which a scouring operation can be effected on a toe end portion of the shoe bottom, the arrangement being such that relative movement, both lengthwise and heightwise of such shoe bottom, is effected between the scouring tool support (324) and the shoe support, the apparatus being characterised in that such relative movement is controlled by the computer control means in accordance with the set of information stored by the memory device and using appropriate look-up tables.

## Patentansprüche

1. Verfahren zum Ermitteln des Arbeitsweges eines Werkzeuges auf einer dreidimensionalen Fläche eines Werkstückes, wobei in einer Lehrstufe ausgehend von einer anfänglichen Position des Werkzeuges in Bezug auf die Werkstückoberfläche eine Vielzahl von gewählten Positionen des Werkzeuges in Bezug auf die Oberfläche aufeinanderfolgend bestimmt wird, jede derartige Position in der Form von digitalisierten Koordinatenachsenwerten in einem Speicher gespeichert wird und wobei solche den anfänglichen und ausgewählten Positionen entsprechenden gespeicherten Werte einen Satz von Koordinatenachsenwerten bilden, von welchen bei Ausführen eines nachfolgenden Bearbeitungsvorganges an dem oder einem ähnlichen Werkstück der Arbeitsweg des Werkzeuges in Bezug auf die Werkstückoberfläche abgeleitet werden kann, dadurch gekennzeichnet, daß die anfänglichen und gewählten Positionen von anfänglichen und gewählten Berührungspunkten zwischen dem Werkzeug und der Werkstückoberfläche gebildet werden, daß zwecks Bestimmung eines jeden gewählten Berührungspunktes nach dem Speichern der digitalisierten Koordinatenschsenwerte für den vorhergehenden Punkt das Werkzeug zunächst von der Oberfläche um einen vorbestimmten Abstand von diesem Punkt längs einer ersten Dimension getrennt wird, wonach das Werkzeug und die Oberfläche längs dieser ersten und/oder längs einer zweiten Dimension wiederum in Kontakt zurückgebracht werden und in Ansprechen auf eine solche Rückkehrbewegung eine entsprechende Relativbewegung zwischen dem Werkzeug und der Oberfläche gleichzeitig längs einer dritten Dimension eintritt, um somit den vorbestimmten Abstand zwischen dem Werkzeug und diesem zuletzt gespeicherten Punkt aufrechtzuerhalten, daß das Werkzeug und die Oberfläche so in einem weiteren Punkt miteinander in Kontakt gebracht werden, welcher dann gespeichert wird, und daß dieser weitere Punkt, welcher von dem vorhergehenden gespeicherten Punkt in dem vorbestimmten Abstand unabhängig von der Kontur der Oberflache beabstandet ist, somit einen nächsten folgenden gespeicherten Punkt bildet.

2. Verfahren nach Anspruch 1, dadurch gekennzeichnet, daß jeder Punkt von seinem letzten vorher gespeicherten Punkt in dem gleichen vorbestimmten Abstand beabstandet ist.

3. Verfahren nach einem der Ansprüche 1 bis 2, dadurch gekennzeichnet, daß sich die erste Dimension in der Höhe der Oberfläche erstreckt.

4. Verfahren nach einem der Ansprüche 1 bis 3, dadurch gekennzeichnet, daß vor dem Speichern eines jeden Punktes das Werkzeug und die Oberfläche miteinander mit einer vorbestimmten Last in Kontakt gedrückt werden.

5. Verfahren nach Anspruch 4, dadurch gekennzeichnet, daß die Last für alle Punkte konstant ist.

6. Vorrichtung zum fortschreitenden Bearbeiten längs Randabschnitten von Schuhböden, mit einer Schuhstütze, um einen einen Schuh tragenden Leisten mit dem Boden nach oben zu stützen, mit einer Werkzeugstützeinrichtung, einer Einrichtung, um in Bezug auf die Länge, Breite und Höhe eines solchen Schuhbodens eine Relativbewegung zwischen der Schuhstütze und der das Werkzeug tragenden Einrichtung zu bewirken, so daß ein von der Werkzeugstützeinrichtung getragenes Werkzeug längs eines Arbeitsweges in Bezug auf den Boden eines Schuhs bewegt werden kann, der von der Schuhstütze getragen ist, und mit einer Einrichtung, mit welcher unter Verwendung eines Verfahrens nach einem der vorhergehenden Ansprüche der Arbeitsweg in einem Einstellvorgang der Vorrichtung bestimmt werden kann, dadurch gekennzeichnet, daß die den Weg bestimmende Einrichtung

(i) eine Betätigungseinrichtung, mit welcher beginnend von einem ersten ausgewählten Berührungspunkt zwischen dem Werkzeug (168) und dem Schuhboden eine Relativbewegung in Bezug auf die Höhe zwischen der Schuhstütze (18) und der das Werkzeug tragenden Einrichtung (26) über einen vorbestimmten Abstand verursacht, wird,

(ii) eine von Hand betätigbare Steuereinrichtung (646) zum Verursachen einer Relativbewegung bezüglich Höhe und Breite zwischen der Schuhstütze (18) und der das Werkzeug tragenden Einrichtung (26) unter Steuerung der Bedienungsperson,

(iii) eine Einrichtung, die in Ansprechen auf eine Relativbewegung betätigbar ist, welche durch Betrieb der von Hand betätigbaren Steuervorrichtung (646) bewirkt ist, um eine relative Längsbewegung zwischen der Schuhstütze (18) und der Werkzeugtrageinrichtung (26) gleichzeitig mit der Relativbewegung in Bezug auf Höhe und/ oder Breite zu verursachen, um somit den vorbestimmten Abstand zwischen dem Werkzeug (168) und dem ersten gewählten Punkt aufrechtzuerhalten, und

(iv) eine Computersteuereinrichtung einschließt, welche (a) eine Digitalisiereinrichtung, so daß ein Satz von Koordinatensachsenwerten in Bezug auf die relativen Positionen der Schuhstütze (18) und der Werkzeugtrageinrichtung (26) für jeden gewählten Berührungspunkt zwischen Werkzeug (168) und Schuhboden berechnet werden kann, (b) einen Speicher, so daß jeder Satz digitalisierter Werte gespeichert werden kann, wobei die digitalisierten Werte allen ausgewählten Punkten entsprechen, die einen Satz von Information bilden, von denen der Arbeitsweg abgeleitet werden kann und (c) eine Einrichtung umfaßt, so daß im Betrieb der Vorrichtung der Arbeitsweg des Werkzeuges (168) von diesem von dem Speicher gespeicherten Informationssatz abgeleitet ist.

7. Vorrichtung nach Anspruch 6, dadurch gekennzeichnet, daß der Betrieb der Digitalisiereinrichtung unter der Steuerung der Betriebsperson eingeleitet wird, wobei die Anordnung so getroffen ist, daß nach einem solchen Einleiten die Betätigungseinrichtung ebenfalls arbeitet, um eine Relativbewegung in Bezug auf die Höhe zu bewirken, die über einen vorbestimmten Abstand zwischen der Werkzeugtrageinrichtung (26) und der Schuhstütze (18) erfolgt.

8. Vorrichtung nach einem der Ansprüche 6 und 7, dadurch gekennzeichnet, daß die Einrichtung zum Bewirken der Relativbewegung in Bezug auf Länge, Breite und Höhe zwischen der Werkzeugtrageinrichtung und der Schuhstütze eine Vielzahl von numerisch gesteuerten Motoren (144, 84) umfaßt.

9. Vorrichtung nach einem der Ansprüche 6 bis 8, dadurch gekennzeichnet, daß eine Druckaufbereitungseinrichtung (644) vorgesehen ist, mittels welcher Korrekturen an der digitalisierten Information vorgenommen werden können, daß diese Einrichtung eine weitere von Hand betätigbare Vorrichtung (644) umfaßt, deren Betätigung verursacht, daß die Werkzeugtrageinrichtung (26) und die Schuhstütze (18) an einem gewünschten digitalisierten, zu korrigierenden Punkt angeordnet werden, daß die Korrektur von der zuerst erwähnten von Hand betätigbaren Steuervorrichtung (646) durchführbar ist, und daß die Digitalisiereinrichtung betätigbar ist, um einen Satz digitalisierter Werte für die korrigierte Position zu errechnen, wobei dieser Satz dann von der Speichervorrichtung anstelle der Information gespeichert wird, die sich auf den Punkt vor der Korrektur bezieht.

10. Vorrichtung nach einem der Ansprüche 6 bis 9, wobei die Werkzeugtrageinrichtung ein radiales Aufrauhwerkzeug trägt, mit welchem ein Randabschnitt eines Schuhbodens progressiv aufgerauht werden kann, wobei weiterhin ein Scheuerwerkzeug 320 vorgesehen ist, mit welchem ein Scheuern an einem Zehenabschnitt des Schuhbodens ausgeführt werden kann, wobei die Anordnung so getroffen ist, daß eine Relativbewegung in Bezug auf die länge und Höhe eines solchen Schuhbodens zwischen dem Scheuerwerkzeugsupport (324) und der Schuhstütze bewirkt ist, dadurch gekennzeichnet, daß die Relativbewegung von der Computersteuereinrichtung in Übereinstimmung mit dem von dem Speicher gespeicherten Informationssatz unter Verwendung zweckmässiger Nachschlagtabellen gesteuert ist.

**Revendications**

1. Procéde de détermination d'une ligne d'opération d'un outil sur une surface tridimensionnelle d'une pièce, ce procéde comprenant une phase d'apprentissage dans laquelle, en partant d'une position initiale de l'outil par rapport à la surface de la pièce, on détermine successivement une série de positions sélectionnées de l'outil par rapport à la surface, chacune de ces positions étant enregistrée, sous la forme de valeurs numérisées suivant des axes de coordonnées, dans un dispositif de mémorisation, et lesdites valeurs enregistrées, qui correspondent à la position initiale et aux positions sélectionnées, constituant un jeu de valeurs suivant des axes de coordonnées à partir desquelles le trajet de travail de l'outil par rapport à la surface de la pièce peut être déterminée au cours de l'exécution d'une opération consécutive sur la pièce ou sur une pièce analogue, caractérisé en ce que la position initiale et les positions sélectionnées sont constituées par un point de contact initial et des points de contact sélectionnés entre l'outil et la surface de la pièce et, en outre, en ce que, pour déterminer chaque point de contact sélectionné, après l'enregistrement des valeurs numérisées suivant des axes de coordonnées pour le point précédent, l'outil est tout d'abord écarté de ladite surface, d'une distance prédéterminée à partir dudit point, le long d'une première dimension, après quoi l'outil et ladité surface sont remis en contact le long de ladite première dimension et/ou le long d'une deuxième dimension et, en réponse à ce mouvement de retour, il se produit un mouvement relatif correspondant entre l'outil et la surface, simultanément le long d'une troisième dimension, de manière à maintenir la distance prédéterminée entre l'outil et ledit dernier point précédent enregistré, l'outil et la surface étant ainsi mis en contact en un autre point, qui est ensuite enregistré de la façon indiquée plus haut, ledit autre point, qui est donc espacé du dernier point précédent enregistré de la distance prédéterminée, indépendamment du profil de ladite surface, constituant un point enregistré suivant.

2. Procédé selon la revendication 1 dans lequel chaque point est espacé du dernier point précédent enregistré de la même distance prédéterminée.

3. Procédé selon l'une des revendications 1 et 2, dans lequel ladite première dimension s'étend dans le sens de la hauteur de la surface.

4. Procédé selon l'une quelconque des revendications 1 à 3, dans lequel, avant l'enregistrement de chaque point de la façon indiquée, l'outil et la surface sont mis en contact entre eux avec une charge prédéterminée.

5. Procédé selon la revendication 4, dans lequel la charge prédéterminée est constante pour tous les points.

6. Appareil destiné à opérer progressivement le long de parties marginales de dessous de chaussures, comprenant un support de chaussure destiné à supporter une chaussure, le dessous vers le haut, une forme portant une chaussure, des moyens de support d'outil, des moyens servant à provoquer un mouvement relatif dans le sens de la longueur, de la largeur et de la hauteur d'un tel dessous de chaussure, entre le support de chaussure et les moyens de support d'outil, sous l'action desquels un outil supporté par les moyens de support d'outil peut être amené à se déplacer le long d'une ligne d'opération relative au dessous d'une chaussure supportée par le support de chaussure, et des moyens sous l'effet desquels ladite ligne d'opération peut être déterminée dans un mode de réglage de l'appareil, en utilisant un procédé selon l'une quelconque des revendications précédentes, l'appareil étant caractérisé en ce que lesdits moyens de détermination de la ligne comprennent:

(i) des moyens de manoeuvre sous l'effet desquels, en partant d'un premier point de contact sélectionné entre l'outil (168) et un dessous de chaussure, il se produit un mouvement relatif dans le sens de la hauteur entre le support de chaussure (18) et les moyens de support d'outil (26) sur une distance prédéterminée, (ii) un dispositif de commande (646) pouvant être actionné manuellement, qui est destiné à provoquer l'exécution du mouvement relatif dans le sens de la hauteur et dans le sens de la largeur entre le support de chaussure (18) et les moyens de support d'outil (26) sous la commande de l'opérateur; (iii) des moyens, qui peuvent être mis en action en réponse à un mouvement relatif effectué par la manoeuvre dudit dispositif de commande (646) actionné manuellement, pour provoquer l'exécution dudit mouvement relatif dans le sens de la longueur entre le support de chaussure (18) et les moyens de support d'outil (26) simultanément avec un tel mouvement relatif dans le sens de la hauteur et/ou dans le sens de la largeur de façon à maintenir la distance ce prédéterminée entre l'outil (168) et ledit premier point sélectionné, et (iv) des moyens de commande par ordinateur comprenant (a) des moyens de numérisation sous l'action desquels un jeu de valeurs suivant des axes de coordonnées peut être calculé en fonction des positions relatives du support de chaussure (18) et des moyens de support d'outils (26) pour chaque point de contact sélectionné entre l'outil (168) et le dessous de chaussure, (b) un dispositif de mémorisation par lequel chacun de ces jeux de valeurs numérisées peut être enregistré (les valeurs numérisés correspondant à tous les points sélectionnés qui constituent un jeu d'informations à partir duquel la ligne d'opération peut être déterminée), et (c) des moyens sous l'action desquels lorsque la machine est dans un mode de travail, la ligne d'opération de l'outil (168) est déterminée à partir dudit jeu d'informations enregistré par ledit dispositif de mémorisation.

7. Appareil selon la revendication 6, caractérisé en ce que le fonctionnement des moyens de numérisation est déclenche sous la commande de l'opérateur, l'agencement étant tel que, à la suite de ce déclenchement, les moyens d'actionnement sont également amenés à entrer en action pour provoquer l'exécution du mouvement relatif en hauteur sur une distance prédéterminée, comme indiqué plus haut, entre les moyens de support d'outil (26) et le support de chaussure (18)

8. Machine selon l'une quelconque des revendications 6 et 7, caractérisée en ce que les moyens servant à déterminer le mouvement relatif dans le sens de la longueur, de la largeur et de la hauteur, entre les moyens de support d'outil et le support de chaussure, comme indiqué plus haut, comprennent une série de moteurs commandés numériquement (144, 84).

9. Appareil selon l'une quelconque des revendications 6 à 8, caractérisé en ce qu'il est prévu des · ·

moyens de mise en forme (664) par lesquels des corrections peuvent être apportées à l'information numérisée, lesdits moyens comprenant un autre dispositif (644) pouvant être actionné manuellement, dont la manoeuvre amène les moyens de support d'outil (26) et le support de chaussure (18) à être positionnés en un point numérisé désiré à corriger, la correction ètant faite par ledit dispositif de commande actionné manuellement mentionné en premier (646), comme indiqué plus haut, et les moyens de numérisation étant actionnés pour calculer un jeu de valeurs numérisées correspondant à la position corrigée, lequel jeu est ensuite enregistré par le dispositif de mémorisation à la place de l'information correspondant au point avant cette correction.

10. Appareil selon l'une des revendications 6 à 9, dans lequel les moyens de support d'outil supportent un outil de cardage radial sous l'action duquel une partie marginale d'un dessous de chaussure peut être progressivement cardée, et il est prévu en outre un outil de verrage (320) sous l'action duquel une opération de verrage peut être excécutée sur une partie de bout du dessous de chaussure, l'agencement étant tel que le mouvement relatif à la fois dans le sens de la longueur et dans le sens de la hauteur d'un tel dessous de chaussure, est exécuté entre le support d'outils de verrage (324) et le support de chaussure, l'appareil étant caractérisé en ce que ce mouvement relatif est commandé par les moyens de commande par ordinateur conformément au jeu d'informations enregistré par le dispositif de mémorisation et en utilisant des tables de consultation appropriées.

Fig_1...

# Fig_2

650
644
656
654
642
646